# EUROPÄISCHE PATENTSCHRIFT

(11) **EP 0 862 719 B1**
(45) Veröffentlichungstag und Bekanntmachung des Hinweises auf die Patenterteilung: **30.06.1999**
(21) Anmeldenummer: 96938972.5
(22) Anmeldetag: 30.10.1996
(51) Int. Cl.: F27D 21/00, C21C 5/46

(54) **GEFÄSSMANTELSICHERUNG**
SAFETY DEVICE FOR A VESSEL JACKET
DISPOSITIF DE SECURITE POUR L'ENVELOPPE D'UN RECIPIENT

(30) Priorität: 14.11.1995 DE 19544159
(43) Veröffentlichungstag der Anmeldung: 09.09.1998
(73) Patentinhaber: MANNESMANN Aktiengesellschaft, 40213 Düsseldorf (DE)
(72) Erfinder: SCHMITZ, Günter, D-47239 Duisburg (DE)
(74) Vertreter: Meissner, Peter E., Dipl.-Ing.
(86) Internationale Anmeldenummer: DE9602134
(87) Internationale Veröffentlichungsnummer: WO9718427

(56) Entgegenhaltungen:
- EP-A- 0 541 019
- EP-A- 0 638 793
- DE-A- 4 008 007
- DE-A- 4 322 463
- DE-C- 535 181
- US-A- 4 453 399

## Beschreibung

Die Erfindung betrifft eine Gefäßmantelsicherung, insbesondere für kippbare metallurgische Öfen oder Gefäße.
Eine derartige Gefäßmantelsicherung ist aus der EP -A-0 541 019 bekannt. Hierbei wird die Temperatur der Kühlflüssigkeit in der Ofenspule erfaßt und mit Sollwerten verglichen.

Aus der DE3424466 C2 ist eine Einrichtung zur Anzeige einer vorbestimmbaren Reststeinstärke eines feuerfesten Steins, insbesondere eines Gasspülsteins, wie er beispielsweise in Auskleidungen von metallurgischen Gefäßen oder Öfen verwendet wird, bekannt. Diese umfaßt eine Sonde, die mit einer Stromquelle verbindbare elektrische Leiter aufweist und in der Auskleidung des Gefäßes, d.h. vorzugsweise in einem Gasspülstein, fest angeordnet ist. Bedingt durch die im Gefäß ablaufenden metallurgischen Prozesse und dem damit verbundenen Abtrag der Auskleidung kommt es mit der Zeit zu einer Verringerung der Wandstärke des Gasspülsteins, wodurch sich gleichzeitig die Temperatur der Sonde bei Betrieb des Ofens erhöht. Die Sonde ist derart ausgebildet, daß bei Erreichen einer bestimmten Temperatur, die einer gewissen vorgebbaren Reststeinstärke entspricht, die Leiterenden aufschmelzen und dabei einen Kontaktschluß herstellen, durch den ein Warnsignal auslösbar ist.

Die Erfassung einer Überhitzung des Gefäßmantels ist also mittels dieser Sonde prinzipiell möglich. Trotzdem werden solche Sonden nicht eingesetzt, um Durchbrüche des flüssigen Stahls durch den Gefäßmantel kippbarer Gefäße zu verhindern. Eine Verwendung derartiger Sonden für diesen speziellen Einsatzfall ist technisch viel zu aufwendig, insbesondere weil dazu eine Vielzahl von Sonden in aufwendiger Weise elektrisch isoliert in die Auskleidung eingebaut werden müssen.

Üblicherweise wird zur Vermeidung von Überhitzungen des Gefäßmantels und damit von Stahldurchbrüchen die Dicke der Ausmauerung in den meisten Stahlwerken regelmäßig vermessen. Allerdings wird damit nur der normale Verschleiß der Auskleidung erfaßt, nicht aber unregelmäßiger lokaler Ausbrand, wie er bei Betrieb des Ofens spontan immer wieder vorkommt. Eine zuverlässige Verhinderung von Durchbrüchen des Gefäßmantels ist auf diese Weise daher nicht möglich.

Es ist das Ziel der vorliegenden Erfindung, eine Gefäßmantelsicherung anzugeben, insbesondere für metallurgische Öfen und Gefäße, mit der eine zuverlässige Erfassung von Überhitzungen an beliebigen Stellen des Gefäßmantels auf einfache Art und Weise erreicht wird, um sofort bei Auftreten von Überhitzungen Sicherheitsmaßnahmen zur Verhinderung von Stahldurchbrüchen durch den Gefäßmantel einleiten zu können, insbesondere wenn sich das Gefäß in gekippter Lage befindet. Außerdem soll diese Gefäßmantelsicherung mit geringem Aufwand erneuerbar sein.

Die Erfindung löst das Problem durch die im kennzeichnenden Teil des Patentanspruchs 1 angegebenen Merkmale. Durch die kennzeichnenden Merkmale der Unteransprüche 2 bis 10 ist die erfindungsgemäße Gefäßmantelsicherung in vorteilhafter Weise ausgestaltet.

Die Erfindung sieht vor, daß mindestens ein Sensorelement im Bereich des Gefäßmantels angeordnet ist. Das Sensorelement ist hohl ausgebildet, beispielsweise in Form eines Hohlkörpers, und der Hohlraum mit einem unter Druck stehenden Gas beaufschlagbar. Weiter besteht es aus einem Material, welches bei Erreichen einer bestimmten Temperatur, die unterhalb der Schmelztemperatur des Gefäßmantels liegt, schmilzt. Zusätzlich sind Mittel zur Erfassung des Gasdrucks im Hohlraum und zur Auslösung eines Aktuators vorgesehen.

Hierdurch wird erreicht, daß mit sehr einfachen technischen Mitteln Überhitzungen des Gefäßmantels an einer beliebigen Stelle im Mantelbereich zuverlässig erfaßbar sind, so daß automatisch Sicherheitsmaßnahmen ausgelöst werden können, insbesondere das Aufrichten des gekippten Gefäßes durch den Aktuator, was eine erhebliche Reduzierung der Reaktionszeit von der Erfassung der Überhitzung bis zur Sicherung des metallurgischen Gefäßes ermöglicht. Dabei ist diese Gefäßmantelsicherung robust und leicht erneuerbar.

Vorteilhafterweise sind die Sensorelemente rohrförmig ausgebildet und an einem Ende gasdicht verschlossen, d. h. es sind dünne Rohrleitungen verwendbar. Zusätzlich ist das Sensorelement zweckmäßigerweise versehen mit einem Sicherheitsventil und mit einem Drucksensor, der bei Unterschreitung eines vorgegebenen Drucks ein Alarmsignal in einer Steuereinrichtung auslöst, das wiederum beispielsweise den Aktuator zum Aufrichten des Gefäßes in Bewegung setzt. Bedingt durch die kurze Reaktionszeit des Alarmsystems können Durchbrüche des flüssigen Stahls durch den Gefäßmantel zuverlässig verhindert werden, insbesondere dann, wenn das Gefäß sich in horizontaler Lage befindet.

Um einen guten Wärmekontakt zur Gefäßwand zu haben, wird mit der Erfindung vorgeschlagen, das Sensorelement am Gefäßmantel derart anzuordnen, daß dieses mindestens teilweise an diesem anliegt, was wiederum mit geringem technischen Aufwand möglich ist. Der gesamte Gefäßmantel wird mit einem einzigen Sensorelement erfaßt, wenn das Rohr wendelförmig um den Gefäßmantel herum angeordnet ist.

Ein schnelles Anspringen der Gefäßmantelsicherung wird erreicht, wenn das Sensorelement mindestens teilweise aus Kupfer, Messing und / oder Aluminium besteht, d. h. aus Metallen, deren Schmelztemperatur unterhalb der von Stahl liegt.

Alternativ wird vorgeschlagen, das Sensorelement innen im Bereich zwischen Gefäßmantel und Auskleidung anzuordnen. Durch diese Ausgestaltung der Erfindung wird eine weitere Verkleinerung der Reaktionszeit des Gefäßmantelsicherungssystems erzielt.

Zum Ausgleich von Druckschwankungen oder Druckverlusten ist es vorgesehen, einen Druckspeicher als Puffer zu verwenden. Das hat auch den Vorteil, daß eine unbeabsichtigte Abschaltung der Gaszuführung bei Betrieb des Ofens keinen Fehlalarm auslöst.

Mit einer Vielzahl von Sensorelementen, die über den gesamten Gefäßmantel gleichmäßig verteilt sind, ist es außerdem möglich, auch den Ort der Überhitzung des Gefäßmantels zu erfassen, insbesondere um differenzierte Sicherheitsmaßnahmen auszulösen. Vorteilhafterweise sind die auf dem Gefäßmantel aufliegenden Sensorelemente mäanderförmig ausgebildet, so daß trotz unvermeidlicher temperaturbedingter Ausdehnungen die Lage der Gefäßmantelsicherung stabil bleibt.

Ein Ausführungsbeispiel einer erfindungsgemäßen Gefäßmantelsicherung wird nachfolgend anhand der schematischen Zeichnung beschrieben. Diese zeigt in:
- Fig. 1: einen schematischen Querschnitt durch einen Stahlkonverter und
- Fig. 2: eine Vorderansicht des Stahlkonverters nach Fig. 1 mit außen am Gefäßmantel anliegender Gefäßmantelsicherung in verschiedenen Ausführungsformen.

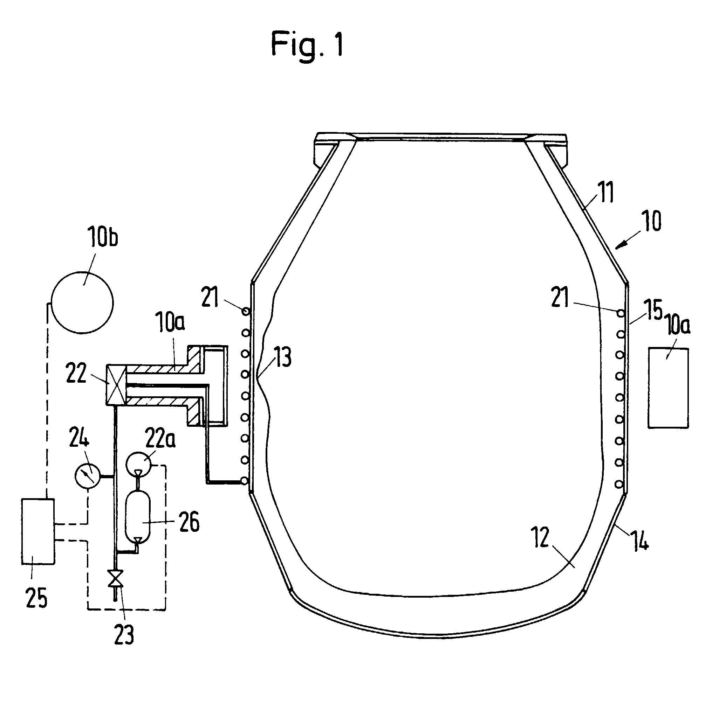

Der in Fig. 1 dargestellte Stahlkonverter besteht in erster Linie aus einem oben offenen birnenförmigen Konvertergefäß 10, das an einem Tragring 10a befestigt in einer Haltevorrichtung kippbar gelagert ist, wobei ein Kippen über einen mit dem Tragring 10a verbundenen Aktuator 10b ermöglicht wird. Das Ofengefäß 10 besitzt außen einen Gefäßmantel 11, 14, 15 aus Stahl, der zur Kühlung an ein Kühlsystem (nicht dargestellt) angeschlossen ist. Der Gefäßmantel 11, 14, 15 ist ganz oder teilweise mit aufgeschweißten Kühlelementen versehen, die von Kühlmitteln durchströmbar ausgebildet sind; als Kühlmittel wird vorzugsweise Wasser verwendet. Auf der Innenseite ist der Gefäßmantel 11, 14, 15 mit einer feuerfesten Ausmauerung 12 versehen, die im wesentlichen dem thermischen (aufgrund ihrer wärmeisolierenden Eigenschaft) und mechanischen Schutz des Gefäßmantels 11, 14, 15 dient.

Prozeßbedingt unterliegt die Ausmauerung 12 einem starken Verschleiß;
insbesondere wird die Ausmauerung 12 im Laufe der Zeit abgetragen. Dabei erfolgt der Abtrag erfahrungsgemäß örtlich oft sehr unterschiedlich, d. h. in einigen Bereichen, besonders oberhalb der Schmelze, erfolgt häufig ein stärkerer Abtrag als an anderen Stellen.
Fig. 1 läßt eine sehr ungleichmäßig abgetragene Ausmauerung erkennen; an der in Fig. 1 mit 13 bezeichneten Stelle weist die Ausmauerung 12 beispielsweise eine Vertiefung und damit eine besonders geringe Wandstärke auf. Eine geringe Wandstärke der Ausmauerung 12 bewirkt eine verringerte Wärmedämmung, was wiederum zu lokalen Überhitzungen des Gefäßmantels 11, 14, 15 führt, wenn sich flüssiger Stahl im Konvertergefäß 10 befindet. Speziell beim Kippen des Stahlkonverters kommen dadurch immer wieder Bereiche der Ausmauerung mit flüssigem Stahl in Berührung, die sich im normalen Konverterbetrieb oberhalb des flüssigen Stahls befinden, so daß es häufig bei gekipptem Konverter zu Durchbrüchen des flüssigen Stahls durch den Gefäßmantel 11, 15 kommt. Dabei können erhebliche Mengen Stahl ausfließen, mit der Folge, daß die Konverterkonstruktion starke Beschädigungen erfährt, insbesondere dann, wenn der Durchbruch im Bereich des Tragrings 10a erfolgt.

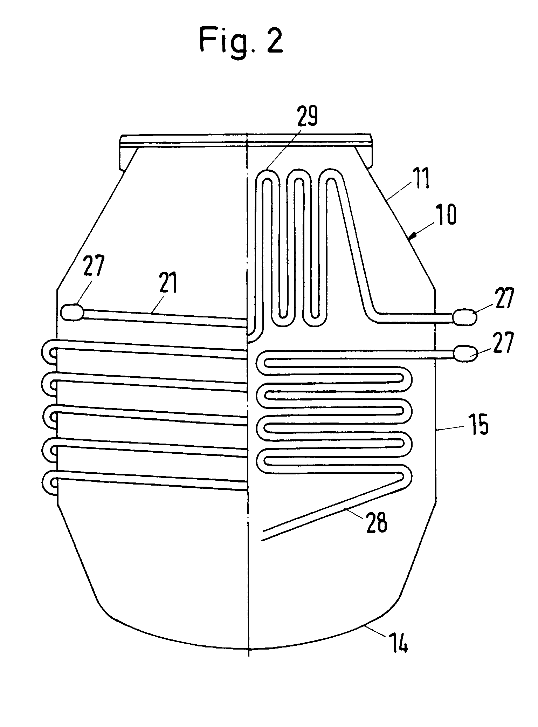

Zur Erfassung von Überhitzungen des Gefäßmantels 11, 15 ist der Stahlkonverter mit einer Gefäßmantelsicherung versehen. Diese weist als Sensorelement 21 ein im Bereich des Gefäßmantels 11, 15 angeordnetes dünnes Rohr auf, das über eine Drehdurchführung 22 mit einem unter Druck stehenden Gas durch eine angeschlossene Pumpe 22a beaufschlagbar ist. Zur Herstellung eines guten Wärmekontaktes liegt das Sensorelement 21 außen (dargestellt in Fig. 1, linke Seite des Konverters, sowie in Fig. 2) mindestens teilweise am Gefäßmantel 11, 15 an; jedoch ist es im Ausführungsbeispiel nicht mit diesem verschweißt und somit leicht zu erneuern. Selbstverständlich kann es auch mit diesem verschweißt sein. Fig. 2 zeigt eine Vorderansicht des Konverters und läßt (linke Seite des Konverters) deutlich erkennen, daß das Sensorelement 21 bei der einfachsten Ausführungsform wendelförmig um den Gefäßmantel herum angeordnet ist. Dadurch wird erreicht, daß der gesamte kritische Bereich des Gefäßmantels 15 durch ein einziges Sensorelement erfaßt wird. Am oberen Ende ist das Sensorelement 21 gasdicht durch einen Verschluß 27 verschlossen; am unteren Ende ist es mit einem Sicherheitsventil 23 versehen. Das Sicherheitsventil 23 ist zweckmäßigerweise so ausgebildet, daß es ab einem bestimmten Gasdruck in der Rohrleitung 21 geöffnet ist.

Das Sensorelement 21 besteht im Ausführungsbeispiel aus Messing, es kann aber auch aus anderen Metallen, beispielsweise Kupfer oder Aluminium bestehen, zweckmäßigerweise aber aus einem Material, dessen Schmelztemperatur unter der von Stahl liegt. Denkbar ist selbstverständlich auch, daß das Sensorelement nur teilweise aus derartigen Metallen besteht. Der Grundgedanke der Erfindung besteht dann, ein Material für die Herstellung des Sensorelementes zu verwenden, das bereits bei einer etwas unterhalb der Schmelztemperatur von Stahl liegenden Temperatur schmilzt. Ein Schmelzen des Sensorelementes an einer beliebigen Stelle (aufgrund einer Überhitzung des Gefäßmantels 11, 15) bewirkt folglich einen starken Druckabfall innerhalb des Sensorelementes 21, aufgrund dessen Sicherheitsmaßnahmen einleitbar sind.

Zur Erfassung des Druckabfalls ist das Sensorelement 21 mit einem Drucksensor 24 versehen. Weiterhin sind der Aktuator 10b, die Pumpe 22a und der Drucksensor 24 signaltechnisch an eine Steuereinrichtung 25 angeschlossen, die in Abhängigkeit von einem starken Druckabfall in dem Sensorelement 21 über Steuersignale eine unmittelbare Steuerung des Aktuators 10b ermöglicht. Die automatische Aufrichtung des Konvertergefäßes 10 durch den Aktuator 10b bei Auslösen der Gefäßmantelsicherung hat den Vorteil einer sehr geringen Reaktionszeit, d.h. der Stahlkonverter wird sofort nach Erfassung einer Überhitzung des Gefäßmantels 11, 15 nahezu ohne Verzögerung aufgerichtet und damit ein Durchbrechen von flüssigem Stahl durch den Mantel 11, 15 zuverlässig verhindert.

Die beste Ausführungsform der Erfindung sieht eine zusätzliche Erfassung des Ortes der Überhitzung vor. Wie aus Fig. 2 linke Seite zu erkennen ist, ist dazu eine Vielzahl von Sensorelementen 21 mit geringer räumlicher Ausdehnung über den gesamten Gefäßmantel 11, 15 gleichmäßig verteilt angeordnet, wobei die einzelnen Sensorelemente 21 vorteilhafterweise jeweils mäanderförmig geformt sind und auf dem Gefäßmantel 11, 15 insbesondere im oberen Bereich 11 horizontal (Element 28) oder vertikal (Element 29) aufliegen. Die Mäanderform hat dabei den Vorteil, daß Ausdehnungen des Gefäßes 10 von dem Sensorelement 21 elastisch abgefangen werden, so daß es zu keinem Verrutschen oder Verspannen der aufliegenden Sensorelemente 21 kommt. Die Sensorelemente 21 sind dabei jeweils an eine separate Pumpe 22a mit einem separaten Drucksensor 24, der mit der gemeinsamen Steuereinrichtung 25 verbunden ist, angeschlossen. Hinsichtlich einer Überhitzung des Gefäßmantels 11, 15 wird durch ein einzelnes Sensorelement jeweils nur ein lokal begrenzter Bereich des Gefäßmantels 11, 15 erfaßt. Eine derartige Ausführung der Erfindung ermöglicht es somit, Sicherheitsmaßnahmen in Abhängigkeit davon einzuleiten, durch welches Sensorelement 28, 29 das Alarmsignal ausgelöst wurde.

Im Sensorelement 21 ist im Ausführungsbeispiel ein Druckspeicher 26 als Puffer eingefügt, um zufällige Druckschwankungen oder geringe Druckverluste, z.B. aufgrund von sehr kleinen Lecks, auszugleichen. Dadurch wird insbesondere sichergestellt, daß bei Betrieb des Konverters 10 ein kurzzeitiger Ausfall der zur Gasbeaufschlagung des Sensorelementes 21 eingesetzten Pumpe 22a keinen Fehlalarm auslöst.

Alternativ ist es selbstverständlich auch möglich, das Sensorelement beispielsweise in Form eines Rohres innen zwischen Gefäßmantel und Auskleidung anzuordnen (dargestellt in Fig. 1, rechte Seite des Konverters), insbesondere anliegend am wassergekühlten Gefäßmantel. Damit ist ein intensiverer Wärmekontakt des Sensorelementes 21 mit der Ausmauerung 12 verbunden, so daß Überhitzungen des Gefäßmantels 11, 15 bereits im Vorfeld anzeigbar sind.

### BEZUGSZEICHENLISTE:

- 10: Konvertergefäß
- 10a: Tragring
- 10b: Aktuator
- 11: Mündung des Gefäßmantels
- 12: Ausmauerung
- 13: Ausmauerungsstelle
- 14: Boden des Gefäßmantels
- 15: Zylinder des Gefäßmantels

- 21: Sensorelement
- 22: Drehdurchführung
- 22a: Pumpe
- 23: Sicherheitsventil
- 24: Drucksensor
- 25: Steuereinrichtung
- 26: Druckspeicher
- 27: Verschluß
- 28: mäanderförmiges Rohrelement, horizontal
- 29: mäanderförmiges Rohrelement, vertikal

## Patentansprüche

1. Gefäßmantelsicherung, insbesondere für kippbare metallurgische Öfen oder Gefäße,
**dadurch gekennzeichnet,**
daß mindestens ein Sensorelement (21) zur Erfassung einer Überhitzung im Bereich des Gefäßmantels (11, 15) angeordnet ist, das hohl ausgebildet und mit einem unter Druck stehenden Gas beaufschlagbar ist und das wenigstens teilweise aus einem Material besteht, das bereits bei einer etwas unterhalb der Schmelztemperatur von Stahl liegenden Temperatur schmilzt, und daß Mittel (25) zur Erfassung des Gasdrucks und zur Auslösung eines Aktuators (10b) vorgesehen sind.

2. Gefäßmantelsicherung nach Anspruch 1,
**dadurch gekennzeichnet,**
daß das Sensorelement (21) rohrförmig ausgebildet und an einem Ende durch einen Verschluß (27) gasdicht verschlossen ist.

3. Gefäßmantelsicherung nach Anspruch 2,
**dadurch gekennzeichnet,**
daß das Sensorelement (21) mit einem Sicherheitsventil (23) und einem Drucksensor (24) versehen ist.

4. Gefäßmantelsicherung nach Anspruch 2,
**dadurch gekennzeichnet,**
daß das Sensorelement (21) außen mindestens teilweise am Gefäßmantel (11, 15) anliegend angeordnet ist.

5. Gefäßmantelsicherung nach Anspruch 2,
**dadurch gekennzeichnet,**
daß das Sensorelement (21) wendelförmig um den Gefäßmantel (11, 15) herum angeordnet ist

6. Gefäßmantelsicherung nach Anspruch 2,
**dadurch gekennzeichnet,**
daß das Sensorelement (21) innen zwischen Gefäßmantel (11, 15) und Auskleidung (12) angeordnet ist.

7. Gefäßmantelsicherung nach Anspruch 2,
**dadurch gekennzeichnet,**
daß ein Druckspeicher (26) vorgesehen ist zum Ausgleich von Druckschwankungen oder Druckverlusten.

8. Gefäßmantelsicherung nach einem der Ansprüche 1 oder 2,
**dadurch gekennzeichnet,**
daß zur Erfassung des Ortes der Überhitzung eine Vielzahl von Sensorelementen (28, 29) über den gesamten Gefäßmantel (11, 15) gleichmäßig verteilt angeordnet sind.

9. Gefäßmantelsicherung nach Anspruch 8,
**dadurch gekennzeichnet,**
daß die einzelnen Sensorelemente (28, 29) mäanderförmig ausgebildet sind.

10. Gefäßmantelsicherung nach einem der obengenannten Ansprüche,
**dadurch gekennzeichnet,**
daß das Sensorelement (21) mindestens teilweise aus Kupfer, Messing und/oder Aluminium besteht.

## Claims

1. Safety device for a vessel jacket, in particular for tiltable metallurgical furnaces or vessels, characterised in that at least one sensor element (21) for detecting a hot spot is disposed in the region of the vessel casing (11, 15) and is hollow and capable of being acted on by a pressurised gas and consists at least partly of a material which already melts at slightly below the melting temperature of steel, and in that means (25) are provided for detecting the gas pressure and for triggering an actuator (10b).

2. Safety device for a vessel jacket according to claim 1, characterised in that the sensor element (21) is tubular and is sealed at one end by a seal (27).

3. Safety device for a vessel jacket according to claim 2, characterised in that the sensor element (21) is provided with a safety valve (23) and a pressure sensor (24).

4. Safety device for a vessel jacket according to claim 2, characterised in that the sensor element (21) is disposed on the exterior at least in part abutting the vessel jacket (11, 15).

5. Safety device for a vessel jacket according to claim 2, characterised in that the sensor element (21) is disposed helically around the vessel jacket (11, 15).

6. Safety device for a vessel jacket according to claim 2, characterised in that the sensor element (21) is disposed on the interior between the vessel jacket (11, 15) and the lining (12).

7. Safety device for a vessel jacket according to claim 2, characterised in that a pressure store (26) is provided for compensating fluctuations in temperature or pressure losses.

8. Safety device for a vessel jacket according to one of claims 1 or 2, characterised in that for detecting the place of a hot spot a large number of sensor elements (28, 29) are evenly distributed over the entire vessel jacket (11, 15).

9. Safety device for a vessel jacket according to claim 8, characterised in that the individual sensor elements (28, 29) are formed in a meandering manner.

10. Safety device for a vessel jacket according to one of the above-mentioned claims, characterised in that the sensor element (21) consists at least partly of copper, brass and/or aluminium.

## Revendications

1. Dispositif de sécurité pour l'enveloppe d'un récipient, en particulier pour des récipients ou fours métallurgiques pouvant basculer, caractérisé en ce qu'au moins un élément capteur (21), pour détecter une surchauffe, est agencé dans la zone de l'enveloppe du récipient (11,15), qui est réalisée en étant creuse et peut être alimentée par un gaz sous pression et qui est constituée au moins partiellement en une matière qui fond déjà pour une température quelque peu inférieure à la température de fusion de l'acier, et en ce que des moyens (25) pour détecter la pression de gaz et pour déclencher un actuateur (10b) sont prévus.

2. Dispositif de sécurité pour l'enveloppe d'un récipient selon la revendication 1,
caractérisé en ce que l'élément capteur (21) est réalisé sous forme tubulaire et est fermé de façon étanche aux gaz à une extrémité par un obturateur (27).

3. Dispositif de sécurité pour l'enveloppe d'un récipient selon la revendication 2,
caractérisé en ce que l'élément capteur (21) est muni d'une soupape de sécurité (23) et d'un capteur de pression (24).

4. Dispositif de sécurité pour l'enveloppe d'un récipient selon la revendication 2,
caractérisé en ce que l'élément capteur (21) est agencé extérieurement au moins partiellement contre l'enveloppe du récipient (11,15).

5. Dispositif de sécurité pour l'enveloppe d'un récipient selon la revendication 2,
caractérisé en ce que l'élément capteur (21) est agencé sous forme hélicoïdale autour de l'enveloppe (11,15) du récipient.

6. Dispositif de sécurité pour l'enveloppe d'un récipient selon la revendication 2,
caractérisé en ce que l'élément capteur (21) est agencé intérieurement entre l'enveloppe du récipient (11,15) et le revêtement (12).

7. Dispositif de sécurité pour l'enveloppe d'un récipient selon la revendication 2,
caractérisé en ce qu'un réservoir sous pression (26) est prévu pour compenser des variations ou pertes de pression.

8. Dispositif de sécurité pour l'enveloppe d'un récipient selon une des revendications 1 ou 2,
caractérisé en ce, pour déterminer le lieu de la surchauffe, une pluralité d'éléments capteurs (28,29) sont agencés de façon régulièrement répartie sur toute l'enveloppe du récipient (11,15).

9. Dispositif de sécurité pour l'enveloppe d'un récipient selon la revendication 8,
caractérisé en ce que les éléments capteurs individuels (28,29) sont réalisés sous forme de méandre.

10. Dispositif de sécurité pour l'enveloppe d'un récipient selon une des revendications précitées,
caractérisé en ce que l'élément capteur (21) est constitué au moins partiellement de cuivre, laiton et/ou aluminium.
